# EUROPÄISCHE PATENTSCHRIFT

(11) **EP 0 714 937 B1**
(45) Veröffentlichungstag und Bekanntmachung des Hinweises auf die Patenterteilung: **15.03.2000**
(21) Anmeldenummer: 95115154.7
(22) Anmeldetag: 26.09.1995
(51) Int. Cl.: C08L 9/06, C08K 5/36, B60C 1/00

(54) **Kautschukmischung, daraus hergestellte Reifenlauffläche und Reifen mit dieser Reifenlauffläche**
Rubber composition, tread made therefrom and tyre containing this tread
Composition de caoutchouc, bande de roulement fabriquée à partir de celle-ci et pneumatique comportant cette bande de roulement

(30) Priorität: 30.11.1994 DE 4442691; 30.11.1994 DE 4442692
(43) Veröffentlichungstag der Anmeldung: 05.06.1996
(73) Patentinhaber: SP Reifenwerke GmbH, 63412 Hanau / Main (DE)
(72) Erfinder: Fuchs, Hans-Bernd, D-63755 Alzenau-Hörstein (DE); Dietrich, Günther, D-60431 Frankfurt (DE); Steinbrecht, Ulrich, D-64372 Ober-Ramstadt (DE)
(74) Vertreter: Manitz, Finsterwald & Partner

(56) Entgegenhaltungen:
- EP-A- 0 623 650
- EP-A- 0 677 548
- US-A- 4 398 582
- US-A- 5 336 730

## Beschreibung

Die vorliegende Erfindung betrifft mit Schwefel vulkanisierbare Kautschukmischungen, die ein Copolymer aus konjugiertem Dien und vinylaromatischer Verbindung, Kieselsäure als Füllstoff, üblicherweise verwendete Zusätze sowie ein Vulkanisationssystem enthalten. Ferner betrifft die Erfindung Reifenlaufflächen, die diese Kautschukmischungen enthalten, sowie Reifen mit einer Reifenlauffläche, die die vulkanisierten Kautschukmischungen enthalten.

Die bei Reifen gewünschten Eigenschaften, wie geringer Rollwiderstand, gute Haftung auf nasser Straße, hohe Abriebfestigkeit, sind nur schwer gleichzeitig zu erreichen, da sie teilweise einander widersprechen. So bewirken Maßnahmen, die zu einer Verringerung des Rollwiderstands führen, eine Abnahme der Abriebfestigkeit. Der teilweise oder völlige Ersatz von Ruß durch den Füllstoff Kieselsäure z.B. verringert zwar den Rollwiderstand des Reifens, verschlechtert aber dessen Abriebfestigkeit.

In der EP 0 447 066 A1 werden Reifen beschrieben, die aus Kautschukmischungen hergestellt sind, die mindestens 30 Gewichtsteile durch Lösungspolymerisation hergestelltes Polybutadien oder Styrol-Butadien-Copolymer, die jeweils auch in silanmodifizierter Form vorliegen können, mit einer Glasübergangstemperatur nicht unter -50°C, höchstens 70 Gewichtsteile eines anderen Dienelastomers, Kieselsäure als Füllstoff sowie spezielle Silankupplungsmittel enthalten. Als andere Dienelastomere werden eine ganze Reihe von Elastomeren aufgezählt unter anderen Naturkautschuk, Polyisopren, durch Emulsionspolymerisation hergestelltes Styrol-Butadien-Copolymer, Polybutadien, wobei in den Beispielen nur Naturkautschuk als anderes Dienelastomer eingesetzt wird. Diese Kautschukmischungen sollen einen guten Kompromiß zwischen Naßgriffigkeit, Rollwiderstand und Abriebfestigkeit ergeben.

In der EP 0 299 074 B1 wird zur Erzielung eines guten Kompromisses zwischen den einander widersprechenden Eigenschaften vorgeschlagen, für Kautschukmischungen, die Kieselsäure als Füllstoff in großen Anteilen enthalten, Polymere zu verwenden, die mit einer speziellen Silanverbindung modifiziert sind. Diese Maßnahme ist wegen der Verwendung spezieller Silanverbindungen für eine industrielle Anwendung ungünstig.

Um diesen Nachteil zu vermeiden, wird in der EP 0 501 227 A1 eine Kautschukmischung vorgeschlagen, die ein durch Lösungspolymerisation in einem Kohlenwasserstofflösemittel hergestelltes Copolymer aus konjugiertem Dien und vinylaromatischer Verbindung, eine ganz spezielle Kieselsäure, die z.B. nach dem in der EP 0 157 703 B1 beschriebenen Verfahren hergestellt ist, üblicherweise verwendete Zusätze sowie ein Vulkanisationssystem enthält. Diese Kautschukmischung wird in bekannter Weise durch stufenweises Vermischen der Bestandteile hergestellt, wobei Temperaturen eingehalten werden, bei denen noch keine Vernetzung eintritt. Der Kautschukmischung kann als Verschnitt mindestens ein weiteres Dienelastomer zugesetzt werden, wie z.B. Polyisopren, Naturkautschuk oder Polybutadien.

In den Beispielen und Vergleichsbeispielen dieser Druckschrift werden Reifenlaufflächen miteinander verglichen, die aus Kautschukmischungen hergestellt wurden, die durch Emulsionspolymerisation herstelltes Styrol-Butadien-Copolymer und spezielle Kieselsäure oder klassische Kieselsäure oder Ruß als Füllstoff enthalten oder die durch Lösungspolymerisation hergestelltes Styrol-Butadien-Copolymer und spezielle Kieselsäure oder Ruß als Füllstoff enthalten. Aus den angegebenen Ergebnissen ist zu entnehmen, daß die in der EP 0 501 227 A1 beanspruchten Laufflächen gegen= über den Vergleichslaufflächen einen besseren Kompromiß zwischen den einander widersprechenden Eigenschaften er= geben.

Die nicht vorveröffentlichte EP-A-0 677 548 (die unter Art. 54(3) EPÜ fällt) beschreibt Kaut= schukmischungen, die unter anderem ein durch Emulsionspoly= merisation hergestelltes Styrol-Butadien-Copolymer, ein durch Lösungspolymerisation hergestelltes Styrol-Butadien-Copolymer, mindestens ein Polymer aus der Gruppe Naturkautschuk, synthe= tisches Polyisopren und Polybutadien sowie Kieselsäure ent= halten. Gegebenenfalls kann den Mischungen Ruß zugesetzt wer= den. Als Polymere enthalten die Mischungsbeispiele Naturkaut= schuk oder Polybutadien. Angaben über synthetische Polyiso= prene werden nicht gemacht.

Aus der EP-A-0 623 650 sind Kautschukmischungen bekannt, die, bezogen auf 100 Gewichtsteile Gesamtelastomer, unter anderem 15 bis 60 Gewichtsteile durch Emulsionspolymerisation herge= stelltes Styrol-Butadien-Copolymer, 10 bis 30 Gewichtsteile 3,4-Polyisopren, 10 bis 30 Gewichtsteile cis 1,4-Polybutadien, 10 bis 30 Naturkautschuk, 60 bis 110 Gewichtsteile Kieselsäure, wenigstens einen Kieselsäurekuppler und 0 bis 50 Gewichtsteile Ruß enthalten. Alle Kautschukmischungen enthalten Naturkaut= schuk als Mußkomponente.

Die US-A-4 398 582 beschreibt Kautschukmischungen, die 10 bis 60 Gewichtsteile durch Lösungspolymerisation hergestelltes Styrol-Butadien-Copolymer, 10 bis 50 Gewichtsteile durch Emulsionspolymerisation hergestelltes Styrol-Butadien-Copoly= mer, 0 bis 80 Gewichtsteile wenigstens eines Polymers aus der Gruppe Naturkautschuk, synthetisches Polyisopren, Polybutadien und durch Emulsionspolymerisation hergestelltes Styrol-Buta= dien-Copolymer mit niedrigerem Styrolgehalt sowie 40 bis 80 Gewichtsteile Ruß enthalten, wobei alle Gewichtsteile auf 100 Gewichtsteile Gesamtelastomer bezogen sind.

Aus der US-A-5 336 730 sind Kautschukmischungen bekannt, die auf 100 Gewichtsteile wenigstens eines Dienelastomers, 5 bis 90 Gewichtsteile Kieselsäuren 0 bis 80 Gewichtsteile Ruß und einen Kieselsäurekuppler enthalten. Als geeignete Dienelastomere wird eine große Anzahl von Polymeren, Copoly= meren und Terpolymeren aufgezählt. In allen Beispielen wird Naturkautschuk verwendet.

Aufgabe der Erfindung ist die Bereitstellung von Kautschuk= mischungen, die in Reifenlaufflächen einen guten Kompromiß zwischen den einander widersprechenden Eigenschaften haben, ohne daß spezielle Kieselsäuren verwendet werden müssen. Insbesondere sollen die Kautschukmischungen Reifenlaufflächen ergeben, die alle bekannten vorteilhaften, durch Kieselsäure erzielten Eigenschaften besitzen, ohne daß die anderen durch Ruß verursachten guten Eigenschaften beeinträchtigt werden.

Ausgehend von der eingangs genannten mit Schwefel vulkanisier= baren Kautschukmischung wird diese Aufgabe in einer ersten Ausführungsform dadurch gelöst, daß die Kautschukmischung 5 bis 28 Gewichtsteile durch Lösungspolymerisation hergestelltes Copolymer aus konjugiertem Dien und vinylaromatischer Verbindung, 10 bis 70 Gewichtsteile durch Emulsionpolymerisation hergestell= tes Copolymer aus konjugiertem Dien und vinylaromatischer Ver= bindung, 5 bis 40 Gewichtsteile Polyisopren, mit einem 3,4-Bindungsgehalt von mindestens 50 Gew.-%, 10 bis 50 Gewichts= teile Polybutadien, 25 bis 90 Gewichtsteile Kieselsäure sowie 5 bis 90 Gewichtsteile Ruß enthält, wobei alle Gewichtsteile jeweils auf 100 Gewichtsteile Gesamtelastomere bezogen sind.

In einer zweiten Ausführungsform wird die Aufgabe durch eine Kautschukmischung gelöst, die aus 10 bis 85 Gewichtsteilen durch Emulsionsplymerisation hergestelltem Copolymer aus konjugiertem Dien und vinylaromatischer Verbindung, 5 bis 40 Gewichtsteilen Polyisopren mit einem 3,4-Bindungsgehalt von mindestens 50 Gew.-%, 10 bis 50 Gewichtsteilen Polybutadien, 25-90 Gewichtsteilen Kieselsäure, 20 bis 90 Gewichtsteilen Ruß, wobei alle Gewichtsteile jeweils auf 100 Gewichtsteile Gesamtelastomere bezogen sind, üblicherweise verwendeten Zusätzen sowie einem Vulkanisationssystem besteht.

Es wurde gefunden, daß diese Kautschukmischungen zu Reifenlaufflächen mit verbessertem Rollwiderstand und verbesserter Haftung auf nasser Straße führen ohne Verschlechterung der Abriebfestigkeit, wenn man sie mit Reifenlaufflächen vergleicht, die nur Ruß als Füllstoff sowie Styrol-Butadien-Copolymer als Elastomer enthalten.

Die erfindungsgemäßen Kautschukmischungen können zur Herstellung von Reifenlaufflächen verwendet werden, die für Reifen von Personenkraftwagen, Motorrädern, 4x4 Geländefahrzeugen, Transportern und Leicht-Lastkraftwagen geeignet sind.

Für die Copolymere kann als Dienkomponente 1,3-Butadien, Isopren oder 2,3-Dimethyl-1,3-butadien verwendet werden. Als vinylaromatische Verbindung der Copolymere sind Styrol, o-, m- und p-Methylstyrol geeignet. Bevorzugt sind die Styrol-Butadien-Copolymere.

Das durch Lösungspolymerisation hergestellte Copolymer aus konjugiertem Dien und vinylaromatischer Verbindung ist insbesondere in einer Menge von 10 bis 28 Gewichtsteilen, bezogen auf 100 Gewichtsteile Gesamtelastomere, in der Kautschukmischung der ersten Ausführungsform enthalten. Es können erfindungsgemäß alle im Handel erhältlichen durch Lösungspolymerisation hergestellten Styrol-Butadien-Copolymere verwendet werden. Bevorzugt werden Copolymere mit einer Glasübergangstemperatur (Tg) von -15°C bis -30°C.

Das durch Emulsionspolymerisation hergestellte Copolymer aus konjugiertem Dien und vinylaromatischer Verbindung ist in den Kautschukmischungen der ersten Ausführungsform bevorzugt in einer Menge von 20 bis 70 Gewichtsteilen und insbesondere 20 bis 65 Gewichtsteilen enthalten, bezogen auf 100 Gewichtsteile Gesamtelastomere.

Das durch Emulsionspolymerisation hergestellte Copolymer ist in den Kautschukmischungen der zweiten Ausführungsform bevorzugt in einer Menge von 20 bis 75 Gewichtsteilen und insbesondere 50 bis 75 Gewichtsteilen enthalten, bezogen auf 100 Gewichtsteile Gesamtelastomere.

Es können erfindungsgemäß alle im Handel erhältlichen durch Emulsionspolymerisation hergestellten Styrol-Butadien-Copolymere verwendet werden. Im allgemeinen liegt die Glasübergangstemperatur (Tg) im Bereich von -20°C bis -70°C. Bevorzugt werden Copolymere mit einer Glasübergangstemperatur im Bereich von -25°C bis -55°C. Der Gehalt an vinylaromatischer Verbindung in dem durch Emulsionspolymerisation hergestellten Copolymer liegt vorzugsweise im Bereich von 10 bis 50 Gew.-%, besonders bevorzugt im Bereich von 15 bis 45 Gew.-%.

Die für die Copolymere angegebenen Werte der Glasübergangstemperatur sind nach der Torsionspendel-Methode bestimmte Werte.

Die Copolymere können in Form von ölverstreckten Copolymeren eingesetzt werden. In der Regel kann der Gesamtölgehalt der Kautschukmischungen im Bereich von 20 bis 50, bevorzugt 30 bis 45 Gewichtsteilen je 100 Gewichtsteile Gesamtelastomere liegen.

Die Kautschukmischungen der ersten Ausführungsform enthalten Polyisopren, vorzugsweise im Bereich von 5 bis 30 Gewichtsteilen und insbesondere im Bereich von 10 bis 30 Gewichtsteilen, bezogen auf 100 Gewichtsteile Gesamtelastomere.

Die Kautschukmischungen der zweiten Ausführungsform enthalten vorzugsweise 10 bis 30 Gewichtsteile Isopren und insbesondere 10 bis 25 Gewichtsteile, bezogen auf 100 Gewichtsteile Gesamtelastomere.

Erfindungsgemäß werden Polyisoprene mit einem 3,4-Bindungsgehalt von mindestens 50 Gew.-% eingesetzt. Polyisoprene mit überwiegendem 3,4-Bindungsgehalt sind besonders bevorzugt.

Der Gehalt an Polybutadien in den Kautschukmischungen der ersten Ausführungsform beträgt vorzugsweise 15 bis 40 Gewichtsteile, bezogen auf 100 Gewichtsteile Gesamtelastomere.

Der Gehalt an Polybutadien in den Kautschukmischungen der zweiten Ausführungsform beträgt vorzugsweise 15 bis 50 Gewichtsteile und insbesondere 15 bis 25 Gewichtsteile, bezogen auf 100 Gewichtsteile Gesamtelastomer.

Es können alle im Handel erhältlichen Polybutadiene eingesetzt werden. Bevorzugt verwendet man solche mit einem 1,4-cis-Bindungsgehalt von mindestens 90 Gew.-%.

Als einen Füllstoff enthalten die erfindungsgemäßen Kautschukmischungen Kieselsäure. Der bevorzugte Mengenbereich beträgt in der ersten Ausführungsform 30 bis 90 Gewichtsteile, bezogen auf 100 Gewichtsteile Gesamtelastomergehalt, und in der zweiten Ausführungsform 30 bis 80 Gewichtsteile, und insbesondere 30 bis 45 Gewichtsteile, bezogen auf 100 Gewichtsteile Gesamtelastomergehalt.

Als Kieselsäure kann sowohl "klassische" Kieselsäure als auch Kieselsäure mit einer optimierten Dispergierbarkeit in der Kautschukmischung verwendet werden. Unter "klassischer" Kieselsäure ist Kieselsäure zu verstehen, wie sie üblicherweise zur Reifenherstellung verwendet wird und als Handelsprodukte von verschiedenen Herstellern angeboten wird. Üblicherweise haben diese Kieselsäuren eine BET-Oberfläche zwischen 100 und 250 m²/g, eine CTAB-Oberfläche zwischen 100 und 250 m²/g und eine mit DBP gemessene Ölaufnahme zwischen 150 und 250 ml/100 g. Als Kieselsäure mit einer optimierten Dispergierbarkeit kann zum Beispiel Kieselsäure verwendet werden, wie sie in der EP-0 157 703 B1 beschrieben ist. Erfindungsgemäß wird vorzugsweise eine Kieselsäure mit einer BET-Oberfläche zwischen 150 und 250 m²/g verwendet.

Als weiteren Füllstoff enthalten die erfindungsgemäßen Kautschukmischungen Ruß. Bei einer bevorzugten Gruppe der ersten Ausführungsform liegt der Gehalt im Bereich von 30 bis 70 Gewichtsteilen, bezogen auf 100 Gewichtsteile Gesamtelastomeren. Bei dieser Gruppe wird der Kieselsäuregehalt vorzugsweise niedriger gewählt, etwa im Bereich von 30 bis 50 Gewichtsteilen. Entsprechend korreliert bei einer zweiten bevorzugten Gruppe der ersten Ausführungsform ein niedriger Rußgehalt mit einem höheren Kieselsäuregehalt etwa im Bereich von 70 bis 90 Gewichtsteilen.

Der Rußgehalt beträgt bei der zweiten Ausführungsform vorzugsweise 30 bis 70 Gewichtsteile und insbesondere 30 bis 55 Gewichtsteile je 100 Gewichtsteile Gesamtelastomere.

Innerhalb der für die zweite Ausführungsform angegebenen Bereiche für den Kieselsäure- und Rußgehalt wird bei Verwendung eines hohen Kieselsäureanteils ein geringerer Anteil an Ruß und umgekehrt gewählt. Vorzugsweise beträgt die Gesamtmenge an Kieselsäure und Ruß 60 bis 100 Gewichtsteile je 100 Gewichtsteile Gesamtelastomere.

Als Ruß können die üblichen im Handel zur Reifenherstellung angebotenen Rußsorten eingesetzt werden. Der Ruß kann auch als Bestandteil des Verstärkungsmittels der erfindungsgemäßen Kautschukmischungen zugesetzt werden. Die angegebenen Rußgehalte umfassen somit diesen Rußanteil im Verstärkungsmittel.

Als übliche Zusätze können die erfindungsgemäßen Kautschukmischungen aromatische und/oder naphthenische Öle, Verstärkungsmittel, Alterungsschutzmittel, Tackifier, Aktivatoren und Verarbeitungshilfsmittel enthalten. Ferner enthalten die erfindungsgemäßen Kautschukmischungen ein Vulkanisationssystem mit Schwefel und Vulkanisationsbeschleunigern.

Die Kautschukmischungen können nach folgendem mehrstufigem Verfahren herstellt werden. In einer ersten Stufe werden die Elastomere mit den üblichen Zusätzen, dem Ruß und der Kieselsäure in einem Kneter gemischt. Die Temperatur soll dabei nicht auf Werte steigen, bei denen bereits eine Vernetzung einsetzt. Üblicherweise sollen Temperaturen von 160°C nicht überschritten werden. Nach der Abkühlung der Mischung wird sie nochmals in einer zweiten Stufe geknetet, wobei wiederum die Temperatur nicht auf Werte steigen soll, bei denen eine Vernetzung stattfindet. In der anschließenden dritten Stufe wird das Vulkanisationssystem auf einer Walze eingearbeitet, wobei auch hierbei Temperaturen unterhalb der Vernetzungstemperatur eingehalten werden.Die Zeiten für die Mischprozesse in den einzelnen Stufen sind jeweils so bemessen, daß eine gute Durchmischung der Bestandteile erreicht wird.

Die Erfindung wird an Hand der folgenden Beispiele näher erläutert.

Der Verlustfaktor der erfindungsgemäßen Kautschukmischungen und der zu Vergleichszwecken hergestellten Kautschukmischungen wurde an aus den Mischungen jeweils hergestellten vulkanisierten Probekörpern bestimmt. Zur Bestimmung des Verlustfaktors (tan δ) wird auf DIN 53513 verwiesen. Ein niedriger tan δ korreliert mit einem niedrigen Rollwiderstand. Der Rollwiderstand und das Fahrverhalten auf nasser Straße wurden an Reifen mit vulkanisierten Laufflächen bestimmt, die aus den erfindungsgemäßen Kautschukmischungen und den Vergleichs-Kautschukmischungen hergestellt waren. Der Rollwiderstand wurde nach DIN ISO 8767 bestimmt. Das Fahrverhalten auf nasser Straße wurde mit einem mit den entsprechenden Reifen versehenen Fahrzeug auf einer Teststrecke mit definierten Fahrbahnbedingungen getestet. Die Fahrbahn ist mit einem Wasserfilm definierter Schichtdicke versehen. Das Fahrzeug wird mit ca. 100 bis 110 km/h über die Fahrbahn gefahren. Dabei werden gerade Strecken, Kurven und Schikanen durchfahren. Es werden bei dem Test Kriterien wie Traktion, Über- und Untersteuern, Beschleunigungen, Bremsen u.s.w. bewertet.

Es wurden fünf erfindungsgemäße Kautschukmischungen (Beispiele 1 bis 5) der ersten Ausführungsform und eine vergleichskautschukmischung (Beispiel 6) mit den in der folgenden Tabelle 1 angegebenen Zusammensetzungen hergestellt, wobei jeweils die Gewichtsteile der Komponenten in den Mischungen angegeben sind.

**Tabelle 1**

| Beispiele | 1 | 2 | 3 | 4 | 5 | 6 |
|---|---|---|---|---|---|---|
| Bestandteile | | | | | | |
| Emulsions-SBR 1 | -- | -- | -- | -- | -- | 31.73 |
| Lösungs-SBR | 34,375 | 34,375 | 34,375 | 34,375 | 34,375 | |
| Emulsions-SBR 2 | 41,25 | 41,25 | 41,25 | 41,25 | 41,25 | 93,87 |
| Polyisopren | 15 | 15 | 15 | 15 | 15 | |
| Polybutadien | 30 | 30 | 30 | 30 | 30 | |
| Kieselsäure VN 3 | 80 | 37,5 | 37,5 | 80 | | |
| Kieselsäure 3370 | | | | | 80 | |
| Ruß N 375 | | | 40 | | | |
| Ruß Vulkan 5H | | 40 | | | | |
| Ruß N 234 | | | | | | 79 |
| Verstärkungsmittel | 12,8 | 6 | 6 | 13,8 | 13,8 | |
| Zinkoxid | 3 | 3 | 3 | 3 | 3 | 3 |
| Stearinsäure | 2 | 2 | 2 | 2 | 2 | 2 |
| Alterungsschutzmittel A | 2,5 | 2,5 | 2,5 | 2,5 | 2,5 | 2,5 |
| Alterungsschutzmittel B | 1 | 1 | 1 | 1 | 1 | 1 |
| Ozonschutzmittel A | 1 | 1 | 1 | 1 | 1 | 1 |
| Ozonschutzmittel B | 2 | 2 | 2 | 2 | 2 | 2 |
| Aromatisches Öl | 17,5 | 17,5 | 17,5 | 17,5 | 17,5 | 12,7 |
| (Gesamtölgehalt) | 38,125 | 38,125 | 38,125 | 38,125 | 38,125 | 38,3 |
| | | | | | | |
| Vulkanisationsbeschl. A | 1,6 | 1,6 | 1,6 | 1,6 | 1,6 | |
| Vulkanisationsbeschl. B | 1,5 | 0,75 | 0,75 | 1,5 | 1,5 | |
| Vulkanisationsbeschl. C | | | | | | 1,4 |
| Schwefel | 1,5 | 1,4 | 1,4 | 1,5 | 1,5 | 1,9 |

**Tabelle 2**

| Beispiele | 1 | 2 | 3 | 4 | 5 | 6 |
|---|---|---|---|---|---|---|
| Bezugswerte zum gemessenen tan δ bei 70°C | 134 | 130 | 134 | 134 | 145 | 100 |
| | | | | | | |
| Rollwiderstand | 111 | 105 | 104 | 112 | 119 | 100 |
| | | | | | | |
| Fahrverhalten auf nasser Straße | 102 | 99 | 99 | 102 | 103 | 100 |

Die in der Tabelle 1 angegebenen Bestandteile werden im folgenden erläutert:

Lösungs-SBR: Ölverstrecktes, durch Lösungspolymerisation hergestelltes Styrol-Butadien-Copolymer mit 37,5 Gewichtsteilen Öl je 100 Gewichtsteile Styrol-Butadien-Copolymer, mit 25 Gewichtsteilen Styrol je 100 Gewichtsteile Styrol-Butadien-Copolymer, mit einem 1,2-Vinylgehalt im Butadienanteil von ca. 67 % und mit einem Tg von -25°C.

Emulsions-SBR 1: Durch Emulsionspolymerisation hergestelltes Styrol-Butadien-Copolymer mit 22,5 - 24,5 Gewichtsprozent Styrol, mit 8% 1,4-cis-Bindungen im Butadienanteil, 53% 1,4-trans-Bindungen im Butadienanteil und 15 % 1,2-Vinylbindungen im Butadienanteil sowie mit einem Tg von -50°C.

Emulsions-SBR2:Öl verstrecktes, durch Emulsionspolymerisation hergestelltes Styrol-Butadien-Copolymer mit 37,5 Gewichtsteilen hocharomatischem Öl je 100 Gewichtsteile Styrol-Butadien-Copolymer, mit 22,5 bis 24,5 Gewichts% Styrol im reinen (ölunverstreckten) Styrol-Butadien-Copolymer, mit 8 % 1,4-cis-Bindungen im Butadienanteil, 53 % 1,4-trans-Bindungen im Butadienanteil und 15 % 1,2-Vinylbindungen im Butadienanteil sowie mit einem Tg von -50°C.

Polyisopren: 60 % 3,4-Gehalt (NMR-Methode), Tg etwa -10°C.

Polybutadien: 97 % 1,4-cis-Bindungen, 2 % 1,4-trans-Bindungen, <1 % Vinylbindungen, Tg etwa -106°C.

Kieselsäure VN 3: BET-Oberfläche 170 m²/g, Handelsprodukt der Degussa Ultrasil^{R} VN3 Granulat.

Kieselsäure 3370: Spezifische Oberfläche (N₂) 170 m²/g, Spezifische Oberfläche CTAB 165 m²/g, Handelsprodukt der Degussa Ultrasil^{R} 3370 Granulat.

Ruß N 375: Spezifische Oberfläche (N₂) 96 m²/g, Spezifische Oberfläche CTAB 96 m²/g, DBP-Absorption 114 ml/100g, Handelsprodukt der Degussa Corax^{R} N 375.

Ruß Vulkan 5H: Spezifische Oberfläche CTAB 81 m²/g, DBP-Absorption 150 ml/100 g, Handelsprodukt der Cabot Corp.

Ruß N 234: Spezifische Oberfläche (N₂) 125 m²/g, Spezifische Oberfläche CTAB 120 m²/g, DBP-Absorption 125 ml/100 g, Handelsprodukt der Degussa Corax^{R} N 234.

Verstärkungsmittel: Mischung im Verhältnis 1:1 von Ruß N 330 und polysulfidischem Organosilan, Handelsprodukt der Degussa X 50-S.

Alterungsschutzmittel A: N-(1,3-Dimethylbutyl)-N'-phenyl-p-phenylendiamin.

Alterungsschutzmittel B: Poly-1,2-dihydro-2,2,4-trimethylchinolin.

Ozonschutzmittel A: Gemisch aus Diaryl-p-phenylendiaminen.

Ozonschutzmittel B: Gemisch aus n-, iso- und cyclo-Paraffinen.

Vulkanisationsbeschleuniger A: TBBS N-tert.-Butyl-2-benzolthiazol-sulfenamid.

Vulkanisationsbeschleuniger B: DPG N,N'-Diphenylguanidin.

Vulkanisationsbeschleuniger C: CBS N-Cyclohexyl-2-benzothiazolsulfenamid.

Es wurden außerdem zwei erfindungsgemäße Kautschukmischungen der zweiten Ausführungsform (Beispiele 7 und 8) und eine Vergleichskautschukmischung (Beispiel 9) mit den in der folgenden Tabelle 3 angegebenen Zusammensetzungen hergestellt, wobei jeweils die Gewichtsteile der Komponenten in den Mischungen angegeben sind.

**Tabelle 3**

| Beispiele | 7 | 8 | 9 |
|---|---|---|---|
| Bestandteile | | | |
| Emulsions-SBR 1 | -- | -- | 31,73 |
| Emulsions-SBR 3 | 89,375 | 89,375 | 93,87 |
| Polyisopren | 15 | 15 | |
| Polybutadien | 20 | 20 | |
| Kieselsäure VN 3 | 37,5 | 37,5 | |
| Ruß N 375 | | 40 | |
| Ruß Vulkan 5H | 40 | | |
| Ruß N 234 | | | 79 |
| Verstärkungsmittel | 6 | 6 | |
| Zinkoxid | 3 | 3 | 3 |
| Stearinsäure | 2 | 2 | 2 |
| Alterungsschutzmittel A | 2,5 | 2,5 | 2,5 |
| Alterungsschutzmittel B | 1 | 1 | 1 |
| Ozonschutzmittel A | 1 | 1 | 1 |
| Ozonschutzmittel B | 2 | 2 | 2 |
| | | | |
| Aromatisches Öl | 13,75 | 13,75 | 12,7 |
| (Gesamtölgehalt) | 38,125 | 38,125 | 38,3 |
| Vulkanisationsbeschl. A | 1,6 | 1,6 | |
| Vulkanisationsbeschl. B | 0,75 | 0,75 | |
| Vulkanisationsbeschl. C | | | 1,4 |
| Schwefel | 1,4 | 1,4 | 1,9 |

**Tabelle 4**

| Beispiele | 7 | 8 | 9 |
|---|---|---|---|
| Bezugswerte zum gemessenen tan δ bei 70°C | 130 | 132 | 100 |
| | | | |
| Rollwiderstand | 107 | 101 | 100 |
| | | | |
| Fahrverhalten auf nasser Straße | 100 | 100 | 100 |

Die in der Tabelle 3 angegebenen Bestandteile werden im folgenden erläutert:

Emulsions-SBR3:Ölverstrecktes, durch Emulsionspolymerisation hergestelltes Styrol-Butadien-Copolymer mit 37,5 Gewichtsteilen hocharomatischem Öl je 100 Gewichtsteile Styrol-Butadien-Copolymer, mit 31,5 Gewichts % Styrol im reinen (ölun-verstreckten) Styrol-Butadien-Copolymer, mit 7 % 1,4-cis-Bindungen im Butadienanteil, 47 % 1,4-trans-Bindungen im Butadienanteil und 13 % 1,2-Vinylbindungen im Butadienanteil sowie mit einem Tg von -40°C.

Alle übrigen Bestandteile sind mit denen der Tabelle 1 identisch und dort erläutert.

Die Kautschukmischungen der Beispiele 1 bis 9 wurden jeweils folgendermaßen hergestellt. In einen Kneter mit einer Knetertemperierung von 50°C und einer Kneterdrehzahl von 50 pro min wurden in einer ersten Stufe die Elastomere gegeben und geknetet. Dann wurden Zinkoxid, Stearinsäure, Alterungsschutzmittel und Ozonschutzmittel zugegeben und eingeknetet. Anschließend wurden jeweils die Hälfte der Kieselsäure, des Verstärkungsmittels und des aromatischen Öls im Fall der Beispiele 1, 4 und 5, jeweils die Hälfte der Kieselsäure, des Rußes, des Verstärkungsmittels und des aromatischen Öls im Fall der Beispiele 2, 3, 7 und 8 und jeweils die Hälfte des Rußes und des aromatischen Öls im Fall der Vergleichsbeispiele 6 und 9 eingeknetet. Schließlich wurde jeweils die zweite Hälfte der eben genannten Bestandteile zugegeben und eingeknetet. Bei dem gesamten Mischprozeß wurde eine maximale Temperatur von 160°C eingehalten.

Nach Abkühlung der Mischungen wurde in einer zweiten Stufe nochmals geknetet, wobei wiederum eine Temperatur von 160°C nicht überschritten wurde. Die zweite Stufe wurde nur bei den Kautschukmischungen der Beispiele 1 bis 5, 7 und 8 durchgeführt, dagegen nicht bei den Rußmischungen der Beispiele 6 und 9. Schließlich wurde in einer dritten Stufe (bei den Beispielen 6 und 9 die zweite Stufe) das Vulkanisationssystem aus Schwefel und Vulkanisationsbeschleunigern auf einer Walze eingemischt. Auch hierbei wurde eine Temperatur unterhalb der Vernetzungstemperatur eingehalten.

An den aus den Kautschukmischungen hergestellten Probekörpern wurde der Verlustfaktor tan δ bestimmt. Dem für die Kautschukmischung des Beispiels 6 gemessenen Wert wurde der Wert 100 zugeordnet, und die für die anderen Kautschukmischungen 1 bis 5 gemessenen Werte wurden jeweils als Relativwerte gegenüber dem Bezugswert 100 in der Tabelle 2 angegeben. Werte über 100 bedeuten eine Verbesserung der Eigenschaften. Entsprechend wurde bei den Werten vorgegangen, die für den Rollwiderstand und das Fahrverhalten auf nasser Straße bei den aus den Kautschukmischungen hergestellten Reifen gemessen wurden. Alle Ergebnisse sind in Tabelle 2 angegeben. Ebenso wurde den für die Kautschukmischung des Beispiels 9 gemessenen Werten jeweils der Wert 100 zugeordnet und die für die anderen Kautschukmischungen 7 und 8 gemessenen Werte als Relativwerte gegenüber diesem Bezugswert 100 in der Tabelle 4 angegeben.

## Patentansprüche

1. Mit Schwefel vulkanisierbare Kautschukmischung, die ein Copolymer aus konjugiertem Dien und vinylaromatischer Verbindung, Kieselsäure als Füllstoff, üblicherweise ver= wendete Zusätze sowie ein Vulkanisationssystem enthält, dadurch gekennzeichnet, daß die Kautschukmischung 5 bis 28 Gewichtsteile durch Lösungspolymerisation hergestelltes Copolymer aus konjugiertem Dien und vinylaromatischer Verbindung, 10 bis 70 Gewichtsteile durch Emulsionspoly= merisation hergestelltes Copolymer aus konjugiertem Dien und vinylaromatischer Verbindung, 5 bis 40 Gewichtsteile Polyisopren mit einem 3,4-Bindungsgehalt von mindestens 50 Gew.-%, 10 bis 50 Gewichtsteile Polybutadien, 25 bis 90 Gewichtsteile Kieselsäure sowie 5 bis 90 Gewichts= teile Ruß enthält, wobei alle Gewichtsteile jeweils auf 100 Gewichtsteile Gesamtelastomere bezogen sind.

2. Kautschukmischung nach Anspruch 1, dadurch gekennzeichnet, daß sie 10 bis 28 Gewichtsteile durch Lösungspolymerisation hergestelltes Copolymer aus konjugiertem Dien und vinylaromatischer Verbindung, 20 bis 70 Gewichtsteile durch Emulsionspolymerisation hergestelltes Copolymer aus konjugiertem Dien und vinylaromatischer Verbindung, 5 bis 30 Gewichtsteile Polyisopren und 15 bis 40 Gewichtsteile Polybutadien enthält.

3. Kautschukmischung nach Anspruch 1 oder 2, dadurch gekennzeichnet, daß sie 30 bis 90 Gewichtsteile Kieselsäure enthält.

4. Kautschukmischung nach einem der Ansprüche 1 bis 3, dadurch gekennzeichnet, daß das durch Lösungspolymerisation hergestellte Copolymer eine Glasübergangstemperatur von -15°C bis -30°C hat.

5. Mit Schwefel vulkanisierbare Kautschukmischung, bestehend aus 10 bis 85 Gewichtsteilen durch Emulsionspolymerisation hergestelltem Copolymer aus konjugiertem Dien und vinylaromatischer Verbindung, 5 bis 40 Gewichtsteilen Polyisopren mit einem 3,4-Bindungsgehalt von mindestens 50 Gew.-%, 10 bis 50 Gewichtsteilen Polybutadien, 25 bis 90 Gewichtsteilen Kieselsäure, 20 bis 90 Gewichtsteilen Ruß, wobei alle Gewichtsteile jeweils auf 100 Gewichsteile Gesamtelastomere bezogen sind, üblicherweise verwendeten Zusätzen sowie einem Vulkanisationssystem.

6. Kautschukmischung nach Anspruch 5, dadurch gekennzeichnet, daß sie 20 bis 75 Gewichtsteile durch Emulsionspolymerisation hergestelltes Copolymer aus konjugiertem Dien und vinylaromatischer Verbindung, 10 bis 30 Gewichtsteile Polyisopren und 15 bis 50 Gewichtsteile Polybutadien enthält.

7. Kautschukmischung nach Anspruch 5 oder 6, dadurch gekennzeichnet, daß sie 30 bis 80 Gewichtsteile Kieselsäure enthält.

8. Kautschukmischung nach Anspruch 7, dadurch gekennzeichnet, daß sie 30 bis 45 Gewichtsteile Kieselsäure enthält.

9. Kautschukmischung nach einem der Ansrüche 1 bis 8, dadurch gekennzeichnet, daß sie 30 bis 70 Gewichtsteile Ruß enthält.

10. Kautschukmischung nach einem der Ansprüche 1 bis 9, dadurch gekennzeichnet, daß das durch Emulsionspolymerisation hergestellte Copolymer einen Gehalt an vinylaromatischer Verbindung von 10 bis 50 Gew.-% aufweist.

11. Kautschukmischung nach einem der Ansprüche 1 bis 10, dadurch gekennzeichnet, daß das durch Emulsionspolymerisation hergestellte Copolymer eine Glasübergangstemperatur im Bereich von -25°C bis -55°C hat.

12. Kautschukmischungnacheinem der Ansprüche 1 bis 11, dadurch gekennzeichnet, daß das Polybutadien einen 1,4-cis-Bindungsgehalt von mindestens 90 Gew.-% auf= weist.

13. Kautschukmischung nach einem der Ansprüche 1 bis 12, dadurch gekennzeichnet, daß die Copolymere aus Butadien und Styrol hergestellt sind.

14. Reifenlauffläche, dadurch gekennzeichnet, daß sie eine mit Schwefel vulkanisierbare Kautschukmischung nach einem der Ansprüche 1 bis 13 enthält.

15. Reifen, dadurch gekennzeichnet, daß er eine mit Schwefel vulkanisierte Lauffläche nach Anspruch 14 aufweist.

## Claims

1. Rubber mixture vulcanisable with sulphur containing a copolymer of conjugated diene and vinyl aromatic compound, silica as a filler material, customarily used additives and also a vulcanisation system, characterised in that the rubber mixture contains 5 to 28 parts by weight of solution-polymerised copolymer of conjugated diene and vinyl aromatic compound, 10 to 70 parts by weight of emulsion-polymerised copolymer of conjugated diene and vinyl aromatic compound, 5 to 40 parts by weight of polyisoprene, with a 3,4 bond content of at least 50 % by weight, 10 to 50 parts by weight of polybutadiene, 25 to 90 parts by weight of silica and also 5 to 90 parts by weight of carbon black, with all parts by weight being respectively related to 100 parts by weight of total elastomers.

2. Rubber mixture in accordance with claim 1, characterised in that it contains 10 to 28 parts by weight of solution-polymerised copolymer of conjugated diene and vinyl aromatic compound, 20 to 70 parts by weight of an emulsion-polymerised copolymer of conjugated diene and vinyl aromatic compound, 5 to 30 parts by weight of polyisoprene and 15 to 40 parts by weight of polybutadiene.

3. Rubber mixture in accordance with claim 1 or claim 2, characterised in that it contains 30 to 90 parts by weight of silica.

4. Rubber mixture in accordance with one of the claims 1 to 3, characterised in that the solution-polymerised copolymer has a glass transition temperature from -15°C to -30°C.

5. Rubber mixture vulcanisable with sulphur containing 10 to 85 parts by weight of emulsion polymerised copolymer of conjugated diene and vinyl aromatic compound, 5 to 40 part by weight of polyisoprene with a 3,4 bond content of at least 50 % by weight, 10 to 50 parts by weight of polybutadiene, 25 to 90 parts by weight of silica, 20 to 90 parts by weight of carbon black, with all parts by weight being respectively related to 100 parts by weight of total elastomers, customarily used additives and also a vulcanisation system.

6. Rubber mixture in accordance with claim 5, characterized in that it contains 20 to 70 parts by weight of emulsion polymerised copolymer of conjugated diene and vinyl aromatic compound, 10 to 30 parts by weight of polyisoprene and 15 to 50 parts by weight of polybutadiene.

7. Rubber mixture in accordance with claim 5 or claim 6, characterised in that it contains 30 to 80 parts by weight of silica.

8. Rubber mixture in accordance with claim 7, characterised in that it contains 30 to 45 parts by weight of silica.

9. Rubber mixture in accordance with one of the claims 1 to 8, characterised in that it contains 30 to 70 parts by weight of carbon black.

10. Rubber mixture in accordance with one of the claims 1 to 9, characterized in that the emulsion polymerised copolymer has a content of 10 to 50 % by weight of vinyl aromatic compound.

11. Rubber mixture in accordance with one of the claims 1 to 10, characterized in that the copolymer manufactured by emulsion polymerisation has a glass transition temperature in the range from -25°C to -55°C.

12. Rubber mixture in accordance with one of the claims 1 to 11, characterized in that the polybutadiene has a 1,4-cis bond content of at least 90 parts by weight.

13. Rubber mixture in accordance with one of the claims 1 to 12, characterized in that the copolymers are manufactured of butadiene and styrene.

14. Tyre tread, characterized in that it contains a rubber mixture vulcanisable with sulphur in accordance with one of the claims 1 to 13.

15. Tyre, characterized in that it has a tread vulcanised with sulphur in accordance with claim 14.

## Revendications

1. Composition de caoutchouc pouvant être vulcanisée avec du soufre, qui contient un copolymère de diène conjugué et d'un composé vinylique aromatique, de l'acide silicique en tant que charge, des additifs habituellement utilisés ainsi qu'un système de vulcanisation, caractérisée en ce que la composition de caoutchouc contient de 5 à 28 parties en poids d'un copolymère de diène conjugué et d'un composé vinylique aromatique, préparé par polymérisation en solution, de 10 à 70 parties en poids d'un copolymère de diène conjugué et d'un composé vinylique aromatique, préparé par polymérisation en émulsion, de 5 à 40 parties en poids de polyisoprène avec une teneur en liaison 3,4 d'au moins 50 % en poids, de 10 à 50 parties en poids de polybutadiène, de 25 à 90 parties en poids d'acide silicique ainsi que 5 à 90 parties en poids de noir de carbone, toutes ces parties en poids se rapportant à chaque fois à 100 parties en poids d'élastomères totaux.

2. Composition de caoutchouc selon la revendication 1, caractérisée en ce qu'elle contient de 10 à 28 parties en poids d'un copolymère de diène conjugué et d'un composé vinylique aromatique, préparé par polymérisation en solution, de 20 à 70 parties en poids d'un copolymère de diène conjugué et d'un composé vinylique aromatique, préparé par polymérisation en émulsion, de 5 à 30 parties en poids de polyisoprène et de 15 à 40 parties en poids de polybutadiène.

3. Composition de caoutchouc selon la revendication 1 ou 2, caractérisée en ce qu'elle contient de 30 à 90 parties en poids d'acide silicique.

4. Composition de caoutchouc selon l'une des revendications 1 à 3, caractérisée en ce que le copolymère préparé par polymérisation en solution a une température de transition vitreuse de -15°C à -30°C.

5. Composition de caoutchouc pouvant être vulcanisée avec du soufre, comprenant de 10 à 85 parties en poids d'un copolymère de diène conjugué et d'un composé vinylique aromatique, préparé par polymérisation en émulsion, de 5 à 40 parties en poids de polyisoprène avec une teneur en liaison 3,4 d'au moins 50 % en poids, de 10 à 50 parties en poids de polybutadiène, de 25 à 90 parties en poids d'acide silicique, de 20 à 90 parties en poids de noir de carbone, toutes ces parties en poids se rapportant à 100 parties en poids d'élastomères totaux, des additifs habituellement utilisés ainsi qu'un système de vulcanisation.

6. Composition de caoutchouc selon la revendication 5, caractérisée en ce qu'elle contient de 20 à 75 parties en poids d'un copolymère de diène conjugué et d'un composé vinylique aromatique, préparé par polymérisation en émulsion, de 10 à 30 parties en poids de polyisoprène et de 15 à 50 parties en poids de polybutadiène.

7. Composition de caoutchouc selon la revendication 5 ou 6, caractérisée en ce qu'elle contient de 30 à 80 parties en poids d'acide silicique.

8. Composition de caoutchouc selon la revendication 7, caractérisée en ce qu'elle contient de 30 à 45 parties en poids d'acide silicique.

9. Composition de caoutchouc selon l'une des revendications 1 à 8, caractérisée en ce qu'elle contient de 30 à 70 parties en poids de noir de carbone.

10. Composition de caoutchouc selon l'une des revendications 1 à 9, caractérisée en ce que le copolymère préparé par polymérisation en émulsion présente une teneur en composé vinylique aromatique de 10 à 50 % en poids.

11. Composition de caoutchouc selon l'une des revendications 1 à 10, caractérisée en ce que le copolymère préparé par polymérisation en émulsion a une température de transition vitreuse comprise entre -25°C et -55°C.

12. Composition de caoutchouc selon l'une des revendications 1 à 11, caractérisée en ce que le polybutadiène présente une teneur en liaison 1,4-cis d'au moins 90 % en poids.

13. Composition de caoutchouc selon l'une des revendications 1 à 12, caractérisée en ce que les copolymères sont préparés à partir de butadiène et de styrène.

14. Bande de roulement de pneu, caractérisée en ce qu'elle contient une composition de caoutchouc pouvant être vulcanisée avec du soufre selon l'une des revendications 1 à 13.

15. Pneu caractérisé en ce qu'il présente une bande de roulement pouvant être vulcanisée au soufre selon la revendication 14.
